(19) Europäisches Patentamt / European Patent Office / Office européen des brevets

(11) **EP 4 028 677 B1**

(12) **FASCICULE DE BREVET EUROPEEN**

(45) Date de publication et mention de la délivrance du brevet:
**05.11.2025 Bulletin 2025/45**

(21) Numéro de dépôt: **20767809.5**

(22) Date de dépôt: **08.09.2020**

(51) Classification Internationale des Brevets (IPC):
**F16D 48/06** *(2006.01)*

(52) Classification Coopérative des Brevets (CPC):
**F16D 48/06;** F16D 2500/1026; F16D 2500/30415;
F16D 2500/3065; F16D 2500/30803;
F16D 2500/3168; F16D 2500/50287;
F16D 2500/70252; F16D 2500/70605

(86) Numéro de dépôt international:
**PCT/EP2020/075101**

(87) Numéro de publication internationale:
**WO 2021/048141 (18.03.2021 Gazette 2021/11)**

(54) **PROCÉDÉ ET DISPOSITIF DE DÉTERMINATION DU COUPLE TRANSMIS PAR UN EMBRAYAGE**

VERFAHREN UND VORRICHTUNG ZUR BESTIMMUNG DES VON EINER KUPPLUNG ÜBERTRAGENEN DREHMOMENTS

METHOD AND DEVICE FOR DETERMINING THE TORQUE TRANSMITTED BY A CLUTCH

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **10.09.2019 FR 1909966**

(43) Date de publication de la demande:
**20.07.2022 Bulletin 2022/29**

(73) Titulaire: **VALEO EMBRAYAGES**
**80009 Amiens (FR)**

(72) Inventeurs:
• **KRAEMER, Philippe**
**95892 CERGY PONTOISE (FR)**
• **DOOM, Nicolas**
**95892 CERGY PONTOISE (FR)**
• **MAUREL, Pascal**
**95892 CERGY PONTOISE (FR)**

(74) Mandataire: **Valeo Powertrain Systems**
**Service Propriété Intellectuelle**
**Immeuble le Delta**
**14, avenue des Béguines**
**95892 Cergy Pontoise (FR)**

(56) Documents cités:
US-A1- 2013 018 556    US-A1- 2013 018 556
US-A1- 2017 335 905    US-A1- 2017 335 905
US-A1- 2019 219 163    US-A1- 2019 219 163
US-B1- 9 989 146       US-B1- 9 989 146

**Description**

**Domaine technique**

L'invention se rapporte au domaine des procédé et dispositif de détermination du couple transmis par des embrayages, en particulier des embrayages humides comprenant un ou plusieurs disques d'embrayage.

**Arrière-plan technologique**

Il est utile de déterminer le couple effectivement transmis par un embrayage du véhicule automobile notamment pour améliorer la qualité et la répétabilité du confort du véhicule. Afin de déterminer le couple transmis, il est connu de déterminer une courbe caractéristique de l'embrayage, représentant le couple transmis par l'embrayage en fonction d'une variable représentative d'une variable de commande de l'actionneur de l'embrayage, par exemple la pression de commande de l'embrayage. La courbe caractéristique de l'embrayage permet d'estimer le couple effectivement transmis par l'embrayage en fonction de la pression d'actionnement de l'embrayage humide.

Cependant, lors de l'utilisation d'un embrayage humide, la courbe caractéristique varie en fonction de nombreux paramètres, rendant le couple transmis par l'embrayage humide imprécis, et conduisant à un confort du véhicule dégradé (glissement excessif, choc, ...).

On connait la méthode, décrite par DE102015226537, pour déterminer le couple transmis dans laquelle une courbe caractéristique de l'embrayage humide est prédéterminée. Une telle méthode comprend une correction de la courbe caractéristique en fonction d'un coefficient de frottement de l'embrayage qui peut varier selon des conditions de fonctionnement de l'embrayage. Les documents US9989146B1, US2019219163A1, US2017335905A1 et US2013018556A1 décrivent d'autres méthodes de détermination d'un couple transmis par un embrayage. Toutefois, ces méthodes ne permettent pas une estimation du couple transmis de façon fiable et précise.

**Résumé**

Un aspect de l'invention part de l'idée de résoudre les inconvénients de l'art antérieur en proposant un procédé et un dispositif qui permet de déterminer le couple transmis par l'embrayage de façon précise et fiable de sorte à améliorer le confort du véhicule.

Selon la revendication indépendante 1, l'invention fournit un procédé de détermination d'un couple transmis par un embrayage d'un véhicule, le procédé comportant :

recevoir une variable de commande d'un actionneur dudit embrayage, ledit actionneur étant configuré pour déplacer ledit embrayage,

mesurer un ou plusieurs états de fonctionnement dudit embrayage,

calculer un gain en fonction du ou des états de fonctionnement ;

calculer un offset en fonction du ou des états de fonctionnement et notamment calculer l'offset en fonction de la dérivée partielle d'un offset nominal prédéterminé par rapport à chaque état de fonctionnement mesuré; et

calculer le couple transmis en fonction de la variable de commande en utilisant une fonction caractéristique de l'embrayage, ladite fonction caractéristique de l'embrayage étant une fonction affine du couple transmis en fonction de la variable de commande ayant comme pente le gain et comme ordonnée à l'origine l'offset.

Le procédé selon l'invention est avantageux en ce que les paramètres de la fonction caractéristique de l'embrayage sont déterminés en fonction des états de fonctionnement de l'embrayage. En effet, la fonction caractéristique ainsi déterminée en temps réel prend en compte les variations des états de fonctionnement de l'embrayage, par exemple la température de l'huile, le vieillissement de l'huile, le débit d'huile, la pression d'actionnement, la vitesse d'actionnement, la vitesse de glissement de l'embrayage, la vitesse de rotation du moteur, le couple du moteur, la puissance dissipée dans l'embrayage, l'énergie dissipée dans l'embrayage, le vieillissement et l'usure de l'embrayage. Le couple transmis par l'embrayage est donc estimé de façon plus précise et plus fiable.

En particulier, dans l'invention on vise à

calculer une valeur de correction à ajouter à un gain nominal en fonction du ou des états de fonctionnement,

calculer une valeur de correction à ajouter à un offset nominal en fonction du ou des états de fonctionnement,

calculer le couple transmis en fonction de la variable de commande en utilisant une fonction caractéristique de l'embrayage, ladite fonction caractéristique de l'embrayage étant une fonction affine du couple transmis en fonction de la variable de commande ayant comme pente le gain corrigé et comme ordonnée à l'origine l'offset corrigé.

Selon un mode de réalisation, l'embrayage est un embrayage humide dans lequel circule de l'huile et configuré pour transmettre un couple entre un arbre d'entrée et un arbre de sortie. En particulier, le ou les états de fonctionnement sont choisis parmi : une température de l'huile, un débit de l'huile, une vitesse de l'arbre d'entrée, une différence de vitesse entre l'arbre d'entrée et l'arbre de sortie, un coefficient de frottement d'une garniture de l'embrayage, une vitesse de rotation d'un arbre moteur du véhicule, un couple de l'arbre moteur, une puissance dissipée dans l'embrayage ou une énergie dissipée dans l'embrayage, ou l'usure de l'embrayage.

Selon un mode de réalisation, le procédé comporte calculer le gain en fonction d'un gain nominal prédéterminé pour chaque état de fonctionnement nominal, de la dérivée partielle du gain par rapport à chaque état de fonctionnement mesuré, et de l'écart entre l'état de fonctionnement mesuré par rapport à l'état de fonctionnement nominal. En particulier, le gain est égal au gain nominal additionné au produit de la dérivée partielle relative à l'état de fonctionnement considéré, multiplié par l'écart de l'état de fonctionnement mesuré par rapport à l'état de fonctionnement du gain nominal.

Avantageusement, la dérivée partielle du gain nominal par rapport à chaque état de fonctionnement peut être stockée dans une base de données. Alternativement, le procédé peut comporter calculer la dérivée partielle du gain nominal par rapport à chaque état de fonctionnement.

Selon l'invention, le procédé comporte en outre l'étape consistant à calculer l'offset en fonction d'un offset nominal prédéterminé pour chaque état de fonctionnement nominal, de la dérivée partielle de l'offset par rapport à chaque état de fonctionnement mesuré, et de l'écart entre l'état de fonctionnement mesuré par rapport à l'état de fonctionnement nominal. En particulier, l'offset est égal à l'offset nominal additionné au produit de la dérivée partielle relative à l'état de fonctionnement considéré, multiplié par l'écart de l'état de fonctionnement mesuré par rapport à l'état de fonctionnement de l'offset nominal.

Avantageusement, la dérivée partielle de l'offset nominal par à rapport à chaque état de fonctionnement est stockée dans une base de données. Alternativement, le procédé peut comporter l'étape consistant à calculer la dérivée partielle de l'offset nominal par rapport à chaque état de fonctionnement.

Selon un mode de réalisation, le procédé comporte les étapes suivantes:

déterminer un coefficient correcteur en fonction de la variable de commande et/ou une variation temporelle de ladite variable de commande, et
pondérer le couple transmis par ledit coefficient correcteur.

Selon un autre mode de réalisation, le procédé comporte les étapes suivantes :
déterminer un couple d'hystérésis en fonction de la variation temporelle de la variable de commande et du signe de la variation temporelle de la variable de commande, ajouter ledit couple d'hystérésis au couple transmis.

Le couple d'hystérésis permet de prendre en compte le sens d'actionnement de l'embrayage. Le couple transmis par l'embrayage est ainsi plus précis. En particulier, le couple d'hystérésis est positif lorsque l'embrayage est déplacé vers une position embrayée et le couple d'hystérésis est négatif lorsque l'embrayage est déplacé vers une position débrayée.

Selon un mode de réalisation, le procédé comprend l'étape consistant à déterminer un couple résiduel en fonction de l'état de fonctionnement en réponse à la détection d'une position débrayée de l'embrayage. En particulier, l'invention vise à déterminer une valeur de correction à ajouter à un couple résiduel en fonction de l'état de fonctionnement en réponse à la détection d'une position débrayée de l'embrayage.

Selon un mode de réalisation le procédé comporte en outre l'étape consistant à déterminer le couple résiduel en fonction d'un couple résiduel nominal prédéterminé pour chaque état de fonctionnement nominal, de la dérivée partielle du couple résiduel par rapport à un ou chaque état de fonctionnement mesuré, et de l'écart entre l'état de fonctionnement mesuré par rapport à l'état de fonctionnement nominal. En particulier, le couple résiduel est égal au couple résiduel nominal additionné au produit de la dérivée partielle relative à l'état de fonctionnement considéré, multiplié par l'écart de l'état de fonctionnement mesuré par rapport à l'état de fonctionnement de l'offset nominal.

Avantageusement, la dérivée partielle du couple résiduel nominal par à rapport à chaque état de fonctionnement peut être stockée dans une base de données. Alternativement, le procédé peut comporter l'étape consistant à calculer la dérivée partielle du couple résiduel nominal par rapport à chaque état de fonctionnement.

En particulier, le gain nominal, l'offset nominal et le couple résiduel nominal sont stockés dans la base de données. Le procédé peut comprendre l'étape consistant à récupérer le gain nominal, l'offset nominal ou le couple résiduel de la base de données à différents moments d'utilisation du véhicule par exemple au démarrage du véhicule.

Selon un mode de réalisation le procédé comprend une étape consistant à mettre à jour la base de données par consultation d'un serveur distant ou manuellement par un utilisateur du véhicule. En particulier, le gain nominal, l'offset nominal ou le couple résiduel nominal sont mis à jour lors du remplacement de l'embrayage en après-vente. Selon un mode de réalisation, le procédé comprend mettre à jour le gain nominal par à rapport à chaque état de fonctionnement d'une pluralité d'états de fonctionnement après remplacement de l'embrayage. De la même façon, le procédé peut comprendre l'étape consistant à mettre à jour la dérivée partielle de l'offset nominal, respectivement le couple résiduel nominal, par à rapport à chaque état de fonctionnement après chaque mise à jour de l'offset nominal, respectivement du couple résiduel nominal.

Selon un mode de réalisation, le véhicule comprend une pluralité d'embrayages, en particulier une pluralité d'embrayages humides. En particulier, le procédé comprend les étapes suivantes :

déterminer un coefficient de répartition en fonction de la vitesse de glissement de chacun des embrayages, et pondérer le couple résiduel par le coefficient de répartition.

Selon un mode de réalisation, l'actionneur est un actionneur hydraulique et la variable de commande est une pression d'actionnement de l'actionneur.

Selon un autre mode de réalisation, l'invention fournit un procédé de commande d'un embrayage comportant les étapes suivantes :

recevoir un couple de consigne ;
mettre en œuvre le procédé de détermination d'un couple transmis selon l'invention ; et déterminer la variable de commande de l'actionneur afin d'asservir le couple transmis ainsi déterminé au couple de consigne.

Selon un autre aspect suivant la revendication 14, l'invention fournit un dispositif de détermination d'un couple transmis par un embrayage d'un véhicule, le dispositif comprenant des moyens configurés pour :

recevoir une variable de commande d'un actionneur dudit embrayage, ledit actionneur étant configuré pour déplacer ledit embrayage,
mesurer un ou plusieurs états de fonctionnement dudit embrayage,
calculer un gain en fonction du ou des états de fonctionnement ;
calculer un offset en fonction du ou des états de fonctionnement notamment calculer l'offset en fonction de la dérivée partielle d'un offset nominal prédéterminé par rapport à chaque état de fonctionnement mesuré; et
calculer le couple transmis en fonction de la variable de commande en utilisant une fonction caractéristique de l'embrayage, ladite fonction caractéristique de l'embrayage étant une fonction affine du couple transmis en fonction de la variable de commande ayant comme pente le gain et comme ordonnée à l'origine l'offset.

En particulier, l'invention vise à

calculer une valeur de correction à ajouter à un gain en fonction de ou des états de fonctionnement ;
calculer une valeur de correction à ajouter à un offset en fonction de ou des états de fonctionnement ; et
calculer le couple transmis en fonction de la variable de commande en utilisant une fonction caractéristique de l'embrayage, ladite fonction caractéristique de l'embrayage étant une fonction affine du couple transmis en fonction de la variable de commande ayant comme pente le gain corrigé et comme ordonnée à l'origine l'offset corrigé.

Selon un autre aspect, l'invention fournit un véhicule en particulier automobile comprenant un embrayage et un dispositif selon l'invention.

## Brève description des figures

. L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

[fig.1] la figure 1 est une représentation schématique d'un dispositif de transmission de couple d'un véhicule automobile.

[fig.2] la figure 2 est un diagramme d'un premier exemple du procédé de détermination d'un couple transmis pouvant être mis en œuvre par le dispositif de transmission de couple de la figure 1.

[fig. 3] la figure 3 est un schéma bloc d'un deuxième exemple de procédé de détermination d'un couple transmis pouvant être mis en œuvre par le dispositif de transmission de couple de la figure 1.

[fig. 4] la figure 4 est une représentation schématique d'une fonction caractéristique effective d'un embrayage et d'une fonction caractéristique de l'embrayage déterminé par le dispositif de la figure 3.

[fig. 5] la figure 5 est une représentation schématique d'un dispositif de commande d'un embrayage pouvant mettre en œuvre le procédé de la figure 2 ou de la figure 3.

## Description des modes de réalisation

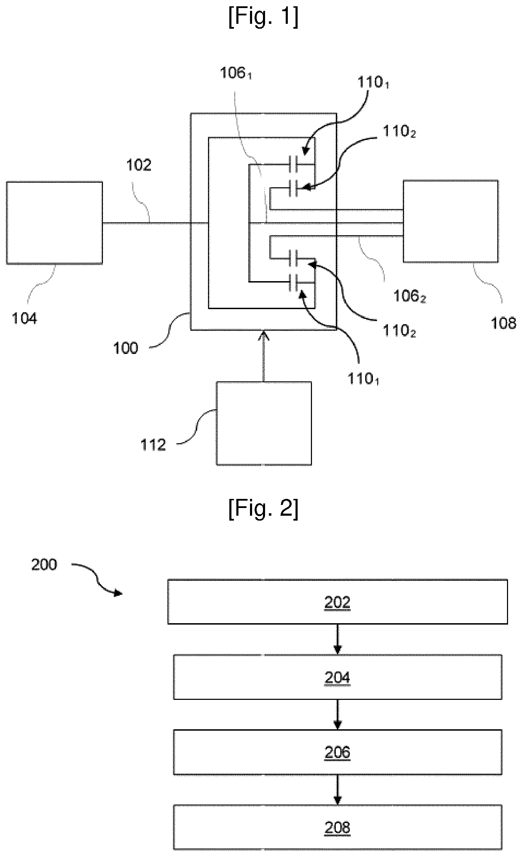

La figure 1 montre une représentation schématique d'un dispositif de transmission de couple 100 d'un véhicule automobile. Dans cet exemple de réalisation, le dispositif de transmission de couple est un double embrayage. D'une part, le dispositif de transmission de couple 100 est destiné à être monté solidaire en rotation d'un arbre menant 102, tel qu'un vilebrequin d'un moteur 104 par exemple un moteur thermique. D'autre part, le dispositif de transmission de couple 100 est destiné à transmettre le couple vers l'un ou l'autre des deux arbres mené 106, et $106_2$ coaxiaux d'une boite de vitesse 108. Lorsque l'embrayage $110_1$ est engagé, il permet de transmettre un couple de l'arbre menant 102 vers l'arbre mené $106_1$ tandis que lorsque l'autre embrayage $110_2$ est engagé, il permet de transmettre le couple de l'arbre menant 102 vers l'arbre mené $106_2$. L'un des arbres menés $106_1$ coopère avec les rapports pairs de la boîte de vitesses tandis que l'autre arbre mené $106_2$ coopère avec les rapports impairs de la boîte de vitesses. Ainsi, il est possible de changer de rapport sans rupture de couple. Dans le mode de réalisation représenté, chaque embrayage 110 est du type embrayage humide, et est actionné par un actionneur hydraulique, non représenté, qui est alimenté par de l'huile à travers une pompe 112 et configuré pour déplacer l'embrayage 110. De préférence, chaque embrayage 110 comprend un ensemble multidisque comprenant plusieurs disques de friction solidaires en rotation de l'arbre menant 102, et plusieurs plateaux respectivement disposés de part et d'autre de chaque disque de friction, solidaires en rotation de l'arbre mené $106_1$ ou $106_2$. Les disques de friction comportent des garnitures de friction fixées de chaque côté de leur disque support. Dans une position embrayée de l'embrayage $110_1$ et/ou $110_2$, les plateaux pincent les garnitures de friction de manière à transmettre un couple entre l'arbre menant 102 et l'arbre mené $106_1$ et/ou $106_2$.

Selon un autre mode de réalisation non représenté, le dispositif de transmission de couple est du type embrayage simple et comprend un seul embrayage 110.

Un couple transmis est transmis par le dispositif de transmission de couple 100 à travers l'embrayage $110_1$ et/ou $110_2$ lorsqu'ils sont en position embrayée vers l'arbre $106_1$ et/ou $106_2$, respectivement. En outre, un couple résiduel, dû à la trainée de l'huile, est transmis par un des embrayages 110 lorsqu'il est en position débrayée.

Le couple transmis par le dispositif de transmission de couple 100 dépend d'une variable de commande des actionneurs hydrauliques et d'une fonction caractéristique de l'embrayage 110 exprimant le couple transmis en fonction de la variable de commande.

Afin de contrôler le couple transmis selon un couple de consigne désiré pour l'arbre mené $106_1$, $106_2$ et/ou $106_3$, il est important de déterminer la fonction caractéristique de l'embrayage 110 d'une façon fiable et précise.

Pour cela, un premier exemple de procédé 200, représenté sur la figure 2, détermine le couple transmis par l'embrayage 110 en estimant la fonction caractéristique de l'embrayage 110 en temps réel. En particulier, la fonction caractéristique de l'embrayage est une fonction affine du couple transmis en fonction de la variable de commande ayant comme pente le gain et comme ordonnée à l'origine l'offset. Le procédé 200 peut être mis en œuvre par le dispositif de transmission de couple 100.

Le procédé 200 comprend :

une étape 202 de réception d'une variable de commande de l'actionneur hydraulique, une étape 204 de mesure d'un état de fonctionnement de l'embrayage 110,
une étape 206 de calcul du gain en fonction de l'état de fonctionnement de l'embrayage 110 et de calcul de l'offset en fonction de l'état de fonctionnement de l'embrayage 110, une étape 208 de calcul du couple transmis en fonction de la variable de commande et de la fonction caractéristique mise à jour avec le gain et l'offset déterminés à l'étape 206.

Avantageusement, la variable de commande est une pression d'actionnement, de préférence appliquée par l'actionneur hydraulique en utilisant la pompe 112.

En particulier, un état de fonctionnement de l'embrayage est une température d'une composante de l'embrayage 110, par exemple la température d'un ou plusieurs disques de l'embrayage 110, ou la température de l'huile ou un débit de l'huile, ou une vitesse de l'arbre mené 106, ou un couple de l'arbre menant 104, ou une vitesse de glissement entre l'arbre menant 104 et l'arbre mené 106, ou un paramètre relatif au vieillissement de l'huile, ou un paramètre relatif à l'usure de l'embrayage 110, ou une énergie dissipée dans l'embrayage 110, ou une puissance dissipée dans l'embrayage 110, etc.

Selon un mode de réalisation, le procédé 200 comprend une étape de détermination du couple résiduel en fonction de l'état de fonctionnement en réponse à la détection d'une position débrayée de l'embrayage.

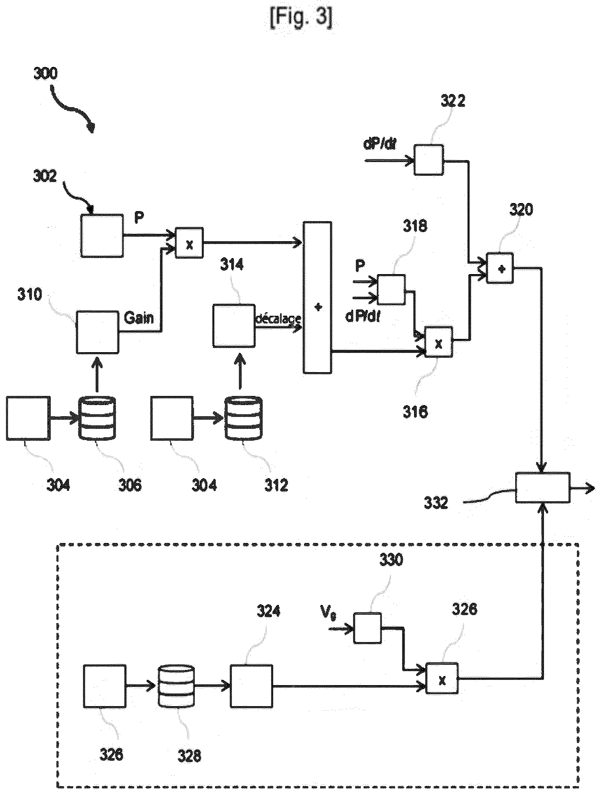

Un deuxième exemple de procédé 300 pour déterminer le couple transmis par l'embrayage 110 est représenté sur la figure 3 en estimant la fonction caractéristique de l'embrayage 110 en temps réel. Le procédé 300 peut être mis en œuvre par le dispositif de transmission de couple 100.

Le procédé 300 comprend une étape de réception d'une variable de commande, en particulier une pression d'actionnement, de l'actionneur hydraulique.

Le procédé 300 comprend aussi une étape 304 de détermination d'une pluralité d'états de fonctionnement en particulier : une température de l'huile, un débit de l'huile et une vitesse de glissement ; la vitesse de glissement étant la différence entre la vitesse de l'arbre menant 104 et l'arbre mené 106.

Le procédé comprend en outre une étape d'extraction d'une première base de données 306, la dérivée partielle d'un gain nominal par rapport à la température de l'huile, la dérivée partielle du gain nominal par rapport au débit de l'huile et la dérivée partielle du gain nominal par rapport à la vitesse de glissement. Avantageusement, la première base de données 306 comprend le gain nominal et la dérivée partielle du gain nominal par rapport à chaque état de fonctionnement. Par exemple, la première base de données 306 comprend une pluralité de dérivées partielles du gain nominal par rapport à une pluralité de températures de l'huile. De la même façon, la première base de données 306 peut comprendre une pluralité de dérivées partielles du gain nominal par rapport à une pluralité de débits de l'huile, respectivement une pluralité de vitesses de glissement.

Le procédé 300 comprend en outre une étape pour calculer le gain en fonction des données retournées par la première base de données 306. En particulier, la variation du gain en fonction des variations des états de fonctionnement est déterminée selon l'équation suivante :

[math 1]

$$d(Gain) = \frac{\partial Gain}{\partial T}dT + \frac{\partial Gain}{\partial Q}dQ + \frac{\partial Gain}{\partial V_g}dV_g$$

Avec T : la température de l'huile, Q : le débit de l'huile et $V_g$ : la vitesse de glissement.

Le gain est alors déterminé selon l'équation :

$$\text{Gain} = G_n + \frac{\partial Gain}{\partial T}(T - T_n) + \frac{\partial Gain}{\partial Q}(Q - Q_n) + \frac{\partial Gain}{\partial V_g}(V_g - V_{g_n})$$

Avec $G_n$ : le gain nominal, $T_n$ : la température de l'huile nominale, $Q_n$ : le débit de l'huile nominal et $V_{g_n}$ : la vitesse de glissement nominale.

Selon un mode de réalisation, le procédé 300 comprend une étape de mise à jour de la base de données 306. Le gain nominal peut être mis à jour par consultation d'un serveur distant ou par un utilisateur du véhicule. Le gain nominal peut être mis à jour à une fréquence prédéterminée ou en réponse à la détermination d'une modification du dispositif de transmission de couple 100, par exemple une modification liée à l'usure normale du dispositif de transmission de couple 100.

Alternativement, le procédé 300 peut comprendre une étape pour calculer les dérivées partielles du gain nominal par rapport aux états de fonctionnement. Selon ce mode de réalisation, la première base de données 306 peut être utilisée pour stocker uniquement le gain nominal.

Le procédé comprend en outre une étape d'extraction d'une deuxième base de données 312, la dérivée partielle d'un offset nominal par rapport à la température de l'huile, la dérivée partielle de l'offset nominal par rapport au débit de l'huile et la dérivée partielle de l'offset nominal par rapport à la vitesse de glissement. Avantageusement, la deuxième base de données 312 comprend l'offset nominal et la dérivée partielle de l'offset nominal par rapport à chaque état de fonctionnement. Par exemple, la deuxième base de données 312 comprend une pluralité de dérivées partielles de l'offset nominal par rapport à une pluralité de températures de l'huile. De la même façon, la deuxième base de données 312 peut comprendre une pluralité de dérivées partielles de l'offset nominal par rapport à une pluralité de débits de l'huile, respectivement une pluralité de vitesses de glissement.

Le procédé 300 comprend en outre une étape de calcul de l'offset en fonction des données retournées par la deuxième base de données 312. En particulier, la variation l'offset en fonction des variations des états de fonctionnement est déterminée selon l'équation suivante :

[math 2]

$$d(Offset) = \frac{\partial Offset}{\partial T}dT + \frac{\partial Offset}{\partial Q}dQ + \frac{\partial Offset}{\partial V_g}dV_g$$

avec T : la température de l'huile, Q : le débit de l'huile et $V_g$ : la vitesse de glissement.

L'offset est alors déterminé selon l'équation :

$$Offset = Offset_n + \frac{\partial Offset_n}{\partial T}(T - T_n) + \frac{\partial Offset_n}{\partial Q}(Q - Q_n) + \frac{\partial Offset_n}{\partial V_g}(V_g - V_{g_n})$$

Avec *Offset*$_n$ : l'offset nominal, $T_n$: la température de l'huile nominale, $Q_n$ : le débit de l'huile nominal et $V_{gn}$ : la vitesse de glissement nominale.

Le procédé 300 peut comprendre une étape de mise à jour de l'offset nominal et des dérivées partielles de l'offset nominal par rapport aux états de fonctionnement de la même façon que pour la mise à jour du gain nominal et de ses dérivées partielles.

Selon un mode de réalisation, le procédé 300 comprend une étape de calcul des dérivées partielles de l'offset par rapport aux états de fonctionnement. Dans ce cas, la deuxième base de données 312 peut être utilisée pour stocker l'offset nominal uniquement.

Le procédé 300 comprend aussi une étape 316 pour pondérer le couple transmis ainsi déterminé par la fonction caractéristique par un coefficient correcteur. Le procédé 300 comprend une étape 318 pour calculer le coefficient correcteur en fonction de la pression d'actionnement et de la variation temporelle de la pression d'actionnement.

Le procédé 300 comprend une étape 320 d'addition d'un couple d'hystérésis au couple transmis tel que pondéré à l'étape 316. Le couple d'hystérésis est déterminé à une étape 322 en fonction de la variation temporelle de la pression d'actionnement et du signe de la variation temporelle de la pression d'actionnement. Cette étape 320 permet de prendre en compte le sens d'actionnement de l'embrayage 110. Par exemple, le signe du couple d'hystérésis est positif lorsque l'embrayage 110 est déplacé vers la position embrayée maximale, ce qui augmente le couple transmis. Le couple d'hystérésis est négatif lorsque l'embrayage 110 est déplacé vers la position débrayée, ce qui réduit le couple transmis.

Selon un mode de réalisation, le procédé 300 comprend une étape 324 de détermination du couple résiduel transmis par le dispositif de transmission de couple 100 lorsqu'un ou plusieurs embrayages 110 sont dans la position débrayée. Le procédé 324 comprend préalablement à l'étape 324, une étape 326 de réception de plusieurs états de fonctionnement, en particulier : la température de l'huile, le débit de l'huile, la vitesse de glissement, la vitesse de l'arbre menant 106 et la pression d'actionnement.

Le procédé comprend en outre une étape d'extraction d'une troisième base de données 328, la dérivée partielle d'un couple résiduel nominal par rapport à la température de l'huile, la dérivée partielle du couple résiduel nominal par rapport au débit de l'huile et la dérivée partielle du couple résiduel nominal par rapport à la vitesse de glissement. Avantageusement, la troisième base de données 328 comprend le couple résiduel nominal et la dérivée partielle du couple résiduel nominal par rapport à chaque état de fonctionnement d'une pluralité d'états de fonctionnement. Par exemple, la troisième base de données 328 comprend une pluralité de dérivées partielles du couple résiduel nominal par rapport à une pluralité de températures de l'huile. De la même façon, la première base de données 306 peut comprendre une pluralité de dérivées partielles du couple résiduel nominal par rapport à une pluralité de débits de l'huile, respectivement une pluralité de vitesses de glissement, la vitesse de l'arbre menant 106 et la pression d'actionnement.

Dans l'étape 324, la variation de couple résiduel en fonction des variations des états de fonctionnement est déterminée selon l'équation suivante :

[math 3]

$$d(\Gamma_r) = \frac{\partial \Gamma_r}{\partial T}dT + \frac{\partial \Gamma_r}{\partial Q}dQ + \frac{\partial \Gamma_r}{\partial V_g}dV_g + \frac{\partial \Gamma_r}{\partial V_e}dV_e + \frac{\partial \Gamma_r}{\partial P}dP$$

avec $\Gamma_r$ :le couple résiduel, T : la température de l'huile, Q :le débit de l'huile, $V_g$ : la vitesse de glissement, $V_e$ : la vitesse de l'arbre menant 106 et P : la pression d'actionnement.

$$\Gamma_r = \Gamma_{rn} + \frac{\partial \Gamma_r}{\partial T}(T - T_n) + \frac{\partial \Gamma_r}{\partial Q}(Q - Q_n) + \frac{\partial \Gamma_r}{\partial V_g}(V_g - V_{g_n}) + \frac{\partial \Gamma_r}{\partial V_e}(V_e - V_{e_n}) + \frac{\partial \Gamma_r}{\partial P}(P - P_n)$$

Avec $\Gamma_{rn}$ : le couple résiduel nominal, : l'offset nominal, $T_n$: la température de l'huile nominale, $Q_n$ : le débit de l'huile nominal, $V_e$ : la vitesse du moteur nominale, $V_{g_n}$ : la vitesse de glissement nominale, et $P_n$: la pression d'actionnement nominale.

Le procédé 300 peut comprendre une étape de mise à jour du couple résiduel nominal et des dérivées partielles du couple résiduel par rapport aux états de fonctionnement de la même façon que pour la mise à jour du gain nominal et de l'offset nominal et de leurs dérivées partielles.

Selon un mode de réalisation, le procédé 300 comprend une étape de calcul des dérivées partielles du couple résiduel par rapport aux états de fonctionnement. Dans ce cas, la troisième base de données 328 peut être utilisée pour stocker le couple résiduel nominal uniquement.

Selon un mode de réalisation, les données de chacune de la première base de données 306, de la deuxième base de données 312 et de la troisième base de données 328 sont stockées dans une seule base de données.

Selon un mode réalisation, chacune de la première base de données 306, de la deuxième base de données 312 et de la troisième base de données 328 est stockée dans la mémoire d'un calculateur intégré dans un dispositif mettant en œuvre le procédé 300 pour déterminer le couple transmis par l'embrayage.

Selon un autre mode de réalisation, chacune de la première base de données 306, de la deuxième base de données 312 et de la troisième base de données 328 est stockée dans la mémoire d'un calculateur distant d'un dispositif mettant en œuvre le procédé 300, par exemple un Cloud, communiquant avec ledit dispositif mettant en œuvre le procédé 300.

Selon un mode de réalisation, le dispositif de transmission de couple 100 comprend une pluralité d'embrayages 110. Dans ce cas, le procédé 300 comprend une étape 326 pour pondérer le couple résiduel par un coefficient de répartition. Le coefficient de répartition est déterminé à une étape 330 en fonction de la vitesse de glissement $V_g$.

Selon un mode de réalisation, le procédé 300 comprend une étape 332 de comparaison du couple transmis tel que corrigé à l'étape 320 et du couple résiduel tel que pondéré à l'étape 326 et une étape de renvoi du maximum entre le couple transmis et le couple résiduel.

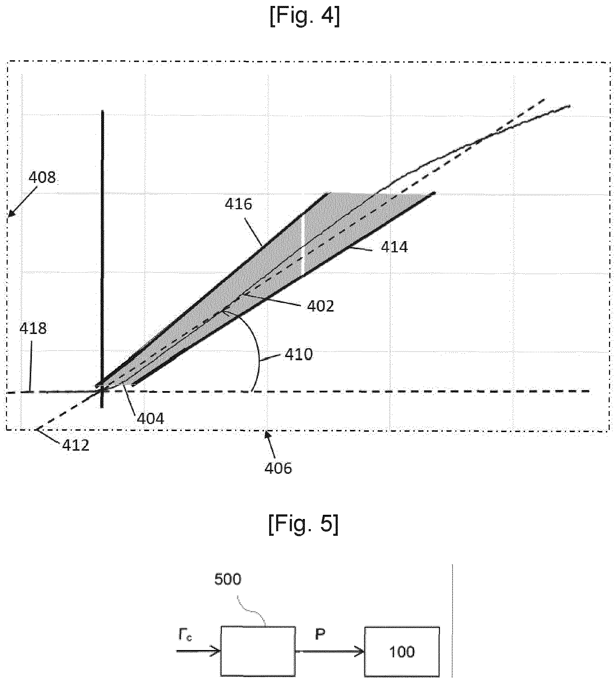

La figure 4 représente un exemple de la fonction caractéristique réelle 402 du dispositif de transmission de couple 100 obtenue expérimentalement et la fonction caractéristique théorique du dispositif de transmission 100 obtenue par le procédé 300. Sur la figure 4, l'axe des abscisses 406 représente l'évolution de la pression d'actionnement et l'axe des ordonnées 408 représente l'évolution du couple transmis. Lorsque l'embrayage 110 est dans la position embrayée, le couple transmis est exprimé par la fonction caractéristique théorique 402 en fonction de la pression d'actionnement. La fonction caractéristique 402 est une fonction affine ayant pour pente, le gain 410 et pour ordonnée à l'origine, l'offset 412.

La fonction caractéristique 402 varie en temps réel en fonction des états de fonctionnement de l'embrayage 110. En particulier, la fonction caractéristique 402 varie entre une limite inférieure 414 lorsque l'embrayage 110 est déplacé vers une position débrayée et une limite supérieure 416 lorsque l'embrayage est déplacé vers une position embrayée.

Dans le cas où l'embrayage 110 est dans la position débrayée, seul le couple résiduel 418 est transmis par le dispositif de transmission de couple 110. Dans ce cas, le couple résiduel 418 est déterminé en fonction des états de fonctionnement de l'embrayage 110.

La figure 5 représente un dispositif 500 de commande d'un embrayage par exemple un embrayage 110 du dispositif de transmission de couple 100. Le dispositif 500 est configuré pour recevoir un couple de consigne $\Gamma_c$, par exemple en provenance d'un dispositif de pilotage du véhicule comprenant le dispositif de transmission de couple 100. Le dispositif 500 est en outre configuré pour déterminer une pression d'actionnement P à appliquer à l'embrayage 110 afin d'asservir le couple transmis de l'embrayage 110 au couple de consigne $\Gamma_c$. En particulier, le dispositif 500 est configuré pour déterminer la pression d'actionnement en fonction de la courbe caractéristique de l'embrayage 110 telle que déterminé par le procédé 200 ou le procédé 300.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Procédé (200,300) de détermination d'un couple transmis par un embrayage (110) d'un véhicule, le procédé comportant :

   recevoir (202,302) une variable de commande d'un actionneur dudit embrayage, ledit actionneur étant configuré pour déplacer ledit embrayage,
   mesurer (204,304,326) un ou plusieurs états de fonctionnement dudit embrayage, calculer (206) un gain en fonction du ou des états de fonctionnement ; calculer (206) un offset en fonction du ou des états de fonctionnement et notamment,

calculer (314) l'offset en fonction de la dérivée partielle d'un offset nominal prédéterminé par rapport à chaque état de fonctionnement mesuré ; et

calculer (208) le couple transmis en fonction de la variable de commande en utilisant une fonction caractéristique de l'embrayage, ladite fonction caractéristique de l'embrayage étant une fonction affine du couple transmis en fonction de la variable de commande ayant comme pente le gain et comme ordonnée à l'origine l'offset.

2. Procédé (200,300) selon la revendication 1, dans lequel l'embrayage est un embrayage humide dans lequel circule de l'huile et configuré pour transmettre un couple entre un arbre d'entrée et un arbre de sortie et dans lequel l'état ou les états de fonctionnement sont choisis parmi : le vieillissement de l'huile, la pression d'actionnement, la vitesse d'actionnement, le couple du moteur, la puissance dissipée dans l'embrayage, l'énergie dissipée dans l'embrayage, le vieillissement et l'usure de l'embrayage, une température de l'huile, un débit de l'huile, une vitesse de l'arbre d'entrée ou une différence de vitesse entre l'arbre d'entrée et l'arbre de sortie.

3. Procédé (200,300) selon la revendication 1 ou 2, comportant en outre calculer (310) le gain en fonction de la dérivée partielle d'un gain nominal prédéterminé par rapport à chaque état de fonctionnement mesuré, la dérivée partielle du gain nominal par rapport à chaque état de fonctionnement étant notamment stockée dans une base de données (306).

4. Procédé (200,300) selon l'une quelconque des revendications 1 à 3, dans lequel la dérivée partielle de l'offset nominal par rapport à chaque état de fonctionnement de la pluralité d'états de fonctionnement est stockée dans une base de données (312).

5. Procédé (300) selon l'une quelconque des revendications 1 à 4, comprenant en outre :

déterminer (318) un coefficient correcteur en fonction de la variable de commande et/ou une variation temporelle de ladite variable de commande, et

pondérer (316) le couple transmis par ledit coefficient correcteur.

6. Procédé (300) selon l'une quelconque des revendications 1 à 5, comprenant en outre :

déterminer (322) un couple d'hystérésis en fonction de la variation temporelle de la variable de commande et du signe de la variation temporelle de la variable de commande,

ajouter (320) ledit couple d'hystérésis au couple transmis.

7. Procédé (300) selon l'une quelconque des revendications 1 à 6, comprenant : déterminer un couple résiduel en fonction de l'état de fonctionnement en réponse à la détection d'une position débrayée de l'embrayage.

8. Procédé (300) selon la revendication 7, comportant en outre déterminer (324) le couple résiduel en fonction de la dérivée partielle d'un couple résiduel nominal prédéterminé par rapport à un ou chaque état de fonctionnement.

9. Procédé (300) selon la revendication 8, dans lequel la dérivée partielle du couple résiduel nominal par à rapport à chaque état de fonctionnement est stockée dans une base de données (328).

10. Procédé (300) selon l'une quelconque des revendications 1, 3 et 8, dans lequel le gain nominal, l'offset nominal et le couple résiduel nominal sont stockés dans la base de données.

11. Procédé (300) selon l'une quelconque des revendications 7 à 10, dans lequel le véhicule comprend une pluralité d'embrayages (110), ledit procédé comprenant :

déterminer (330) un coefficient de répartition en fonction de la vitesse de glissement de chacun des embrayages, pondérer (326) le couple résiduel par le coefficient de répartition.

12. Procédé (200,300) selon l'une quelconque des revendications 1 à 7, dans lequel l'actionneur est un actionneur hydraulique et la variable de commande est une pression d'actionnement de l'actionneur.

13. Procédé de commande d'un embrayage comportant :

recevoir un couple de consigne ;

mettre en œuvre le procédé de détermination d'un couple transmis selon l'une quelconque des revendications 1 à 12 ; et

déterminer la variable de commande de l'actionneur afin d'asservir le couple transmis ainsi déterminé au couple de consigne.

14. Dispositif de détermination d'un couple transmis par un embrayage (110) d'un véhicule, le dispositif comprenant des moyens configurés pour :

recevoir (202,302) une variable de commande d'un actionneur dudit embrayage, ledit actionneur étant configuré pour déplacer ledit embrayage,

mesurer (204,304,326) un ou plusieurs états de fonctionnement dudit embrayage, calculer (206) un gain en fonction de ou des états de fonctionnement ; calculer (206) un offset en fonction de ou des états de fonctionnement notamment

calculer (314) l'offset en fonction de la dérivée partielle d'un offset nominal prédéterminé par rapport à chaque état de fonctionnement mesuré ; et

calculer (208) le couple transmis en fonction de la variable de commande en utilisant une fonction caractéristique de l'embrayage, ladite fonction caractéristique de l'embrayage étant une fonction affine du couple transmis en fonction de la variable de commande ayant comme pente le gain et comme ordonnée à l'origine l'offset.

**Patentansprüche**

1. Verfahren (200,300) zur Bestimmung eines durch eine Kupplung (110) eines Fahrzeugs übertragenen Drehmoments, wobei das Verfahren umfasst:

Empfangen (202,302) einer Steuervariable von einem Aktuator der besagten Kupplung, wobei der besagte Aktuator konfiguriert ist, die besagte Kupplung zu bewegen,

Messen (204,304,326) eines oder mehrerer Betriebszustände der besagten Kupplung,

Berechnen (206) einer Verstärkung als Funktion des oder der Betriebszustände;

Berechnen (206) eines Offsets als Funktion des oder der Betriebszustände und insbesondere;

Berechnen (314) des Offsets als Funktion der partiellen Ableitung eines vorbestimmten nominalen Offsets in Bezug auf jeden gemessenen Betriebszustand; und

Berechnen (208) des übertragenen Drehmoments als Funktion der Steuervariable unter Verwendung einer charakteristischen Funktion der Kupplung, wobei die besagte charakteristische Funktion der Kupplung eine affine Funktion des übertragenen Drehmoments als Funktion der Steuervariable ist, die die Verstärkung als Steigung und das Offset als Ordinatenursprung hat.

2. Verfahren (200,300) nach Anspruch 1, wobei die Kupplung eine Nasskupplung ist, in der Öl zirkuliert und die konfiguriert ist, ein Drehmoment zwischen einer Eingangswelle und einer Ausgangswelle zu übertragen, und wobei der oder die Betriebszustände ausgewählt sind aus: Ölalterung, Betätigungsdruck, Betätigungsgeschwindigkeit, Motordrehmoment, in der Kupplung dissipierte Leistung, in der Kupplung dissipierte Energie, Kupplungsalterung und -verschleiß, Öltemperatur, Öldurchflussrate, Eingangswellengeschwindigkeit oder Geschwindigkeitsdifferenz zwischen der Eingangswelle und der Ausgangswelle.

3. Verfahren (200,300) nach Anspruch 1 oder 2, ferner umfassend
Berechnen (310) der Verstärkung als Funktion der partiellen Ableitung einer vorbestimmten nominalen Verstärkung in Bezug auf jeden gemessenen Betriebszustand, wobei die partielle Ableitung der nominalen Verstärkung in Bezug auf jeden Betriebszustand insbesondere in einer Datenbank (306) gespeichert ist.

4. Verfahren (200,300) nach einem der Ansprüche 1 bis 3, wobei die partielle Ableitung des nominalen Offsets in Bezug auf jeden Betriebszustand der Vielzahl von Betriebszuständen in einer Datenbank (312) gespeichert ist.

5. Verfahren (300) nach einem der Ansprüche 1 bis 4, ferner umfassend:

Bestimmen (318) eines Korrekturkoeffizienten als Funktion der Steuervariable und/oder einer zeitlichen Variation der Steuervariable, und

Gewichten (316) des übertragenen Drehmoments mit dem besagten Korrekturkoeffizienten.

6. Verfahren (300) nach einem der Ansprüche 1 bis 5, ferner umfassend:

Bestimmen (322) eines Hysterese-Drehmoments als Funktion der zeitlichen Variation der Steuervariable und des Vorzeichens der zeitlichen Variation der Steuervariable,
Hinzufügen (320) des besagten Hysterese-Drehmoments zum übertragenen Drehmoment.

7. Verfahren (300) nach einem der Ansprüche 1 bis 6, ferner umfassend:
Bestimmen eines Restdrehmoments als Funktion des Betriebszustands als Reaktion auf die Erkennung einer ausgekuppelten Position der Kupplung.

8. Verfahren (300) nach Anspruch 7, ferner umfassend das
Bestimmen (324) des Restdrehmoments als Funktion der partiellen Ableitung eines vorbestimmten nominalen Restdrehmoments in Bezug auf einen oder jeden Betriebszustand.

9. Verfahren (300) nach Anspruch 8, wobei die partielle Ableitung des nominalen Restdrehmoments in Bezug auf jeden Betriebszustand in einer Datenbank (328) gespeichert ist.

10. Verfahren (300) nach einem der Ansprüche 1, 3 und 8, wobei die nominale Verstärkung, das nominale Offset und das nominale Restdrehmoment in der Datenbank gespeichert sind.

11. Verfahren (300) nach einem der Ansprüche 7 bis 10, wobei das Fahrzeug eine Vielzahl von Kupplungen (110) umfasst, wobei das besagte Verfahren umfasst:

Bestimmen (330) eines Verteilungskoeffizienten als Funktion der Schlupfgeschwindigkeit jeder der Kupplungen,
Gewichten (326) des Restdrehmoments mit dem Verteilungskoeffizienten.

12. Verfahren (200,300) nach einem der Ansprüche 1 bis 7, wobei der Aktuator ein hydraulischer Aktuator ist und die Steuervariable ein Betätigungsdruck des Aktuators ist.

13. Verfahren zur Steuerung einer Kupplung, umfassend:

Empfangen eines Drehmoment-Sollwerts;
Implementieren des Verfahrens zur Bestimmung eines übertragenen Drehmoments nach einem der Ansprüche 1 bis 12; und
Bestimmen der Steuervariable des Aktuators, um das so bestimmte übertragene Drehmoment auf den Drehmoment-Sollwert zu regeln.

14. Vorrichtung zur Bestimmung eines durch eine Kupplung (110) eines Fahrzeugs übertragenen Drehmoments, wobei die Vorrichtung Mittel umfasst, die konfiguriert sind zum:

Empfangen (202,302) einer Steuervariable von einem Aktuator der besagten Kupplung, wobei der besagte Aktuator konfiguriert ist, die besagte Kupplung zu bewegen,
Messen (204,304,326) eines oder mehrerer Betriebszustände der besagten Kupplung,
Berechnen (206) einer Verstärkung als Funktion des oder der Betriebszustände;
Berechnen (206) eines Offsets als Funktion des oder der Betriebszustände und insbesondere;
Berechnen (314) des Offsets als Funktion der partiellen Ableitung eines vorbestimmten nominalen Offsets in Bezug auf jeden gemessenen Betriebszustand; und
Berechnen (208) des übertragenen Drehmoments als Funktion der Steuervariable unter Verwendung einer charakteristischen Funktion der Kupplung, wobei die besagte charakteristische Funktion der Kupplung eine affine Funktion des übertragenen Drehmoments als Funktion der Steuervariable ist, die die Verstärkung als Steigung und das Offset als Ordinatenursprung hat.

**Claims**

1. Method (200,300) for determining a torque transmitted by a clutch (110) of a vehicle, the method comprising:

receive (202,302) a command variable from an actuator of said clutch, said actuator being configured to move said clutch,
measure (204,304,326) one or more operating states of said clutch, calculating (206) a gain as a function of the operating state(s);
calculate (206) an offset as a function of the operating state(s)
and notably;
calculate (314) the offset as a function of the partial derivative of a predetermined nominal offset with respect to each measured operating state; and
calculate (208) the transmitted torque as a function of the command variable using a characteristic function of the clutch, said characteristic function of the clutch being an affine function of the transmitted torque as a function of the command variable having the gain as slope and the offset as origin ordinate.

2. Method (200,300) according to claim 1, wherein the clutch is a wet clutch in which oil circulates and is configured to transmit torque between an input shaft and an output shaft and wherein the operating state or states are chosen from: oil aging, actuation pressure, actuation speed, engine torque, power dissipated in the clutch, energy dissipated in the clutch, clutch aging and wear, oil temperature, oil flow rate, input shaft speed or speed difference between the input shaft and the output shaft.

3. Method (200,300) according to claim 1 or 2, further comprising:

   calculate (310) the gain as a function of the partial derivative of a predetermined nominal gain with respect to each measured operating state,
   the partial derivative of the nominal gain with respect to each operating state being notably stored in a database (306).

4. Method (200,300) according to any one of claims 1 to 3, wherein the partial derivative of the nominal offset with respect to each operating state of the plurality of operating states is stored in a database (312).

5. Method (300) according to any one of claims 1 to 4, further comprising:

   determine (318) a correction coefficient as a function of the command variable and/or a temporal variation of the command variable,
   and weight (316) the transmitted torque by said correction coefficient.

6. Method (300) according to any one of claims 1 to 5, further comprising:

   determine (322) a hysteresis torque as a function of the temporal variation of the command variable and the sign of the temporal variation of the command variable,
   add (320) said hysteresis torque to the transmitted torque.

7. Method (300) according to any one of claims 1 to 6, further comprising:
   determine a residual torque as a function of the operating state in response to the detection of a disengaged position of the clutch.

8. Method (300) according to claim 7, further comprising:
   determine (324) the residual torque as a function of the partial derivative of a predetermined nominal residual torque with respect to one or each operating state.

9. Method (300) according to claim 8, wherein the partial derivative of the nominal residual torque with respect to each operating state is stored in a database (328).

10. Method (300) according to any one of claims 1, 3 and 8, wherein the nominal gain, the nominal offset and the nominal residual torque are stored in the database.

11. Method (300) according to any one of claims 7 to 10, wherein the vehicle includes a plurality of clutches (110), said method comprising:

    determine (330) a distribution coefficient as a function of the slip speed of each of the clutches,
    weight (326) the residual torque by the distribution coefficient.

**12.** Method (200,300) according to any one of claims 1 to 7, wherein the actuator is a hydraulic actuator and the command variable is an actuation pressure of the actuator.

**13.** Method for controlling a clutch comprising: receiving a torque setpoint;

implement the method for determining a transmitted torque according to any one of claims 1 to 12; and determine the command variable of the actuator in order to control the transmitted torque thus determined to the setpoint torque.

**14.** Device for determining a torque transmitted by a clutch (110) of a vehicle, the device comprising means configured to:

receive (202,302) a command variable from an actuator of said clutch, said actuator being configured to move said clutch, measure (204,304,326) one or more operating states of said clutch,
calculate (206) a gain as a function of the operating state(s);
calculate (206) an offset as a function of the operating state(s)
and notably;
calculate (314) the offset as a function of the partial derivative of a predetermined nominal offset with respect to each measured operating state; and
calculate (208) the transmitted torque as a function of the command variable using a characteristic function of the clutch, said characteristic function of the clutch being an affine function of the transmitted torque as a function of the command variable having the gain as slope and the offset as origin ordinate.

[Fig. 1]

[Fig. 2]

[Fig. 3]

[Fig. 4]

[Fig. 5]

## RÉFÉRENCES CITÉES DANS LA DESCRIPTION

**Documents brevets cités dans la description**

- DE 102015226537
- US 9989146 B1
- US 2019219163 A1
- US 2017335905 A1
- US 2013018556 A1